# EUROPEAN PATENT SPECIFICATION

(11) **EP 1 874 861 B1**
(45) Date of publication and mention of the grant of the patent: **25.02.2009**
(21) Application number: 05749627.5
(22) Date of filing: 28.04.2005
(51) Int. Cl.: C08L 9/00, C08L 21/00, B60C 1/00, C08F 220/36, C08L 33/14

(54) **TIRE AND CROSSLINKABLE ELASTOMERIC COMPOSITION**
REIFEN UND VERNETZBARE ELASTOMERE ZUSAMMENSETZUNG
PNEU ET COMPOSITION ELASTOMERE RETICULABLE

(43) Date of publication of application: 09.01.2008
(73) Proprietor: PIRELLI TYRE S.p.A., 20126 Milano (IT)
(72) Inventor: CIPRIANI, Chiara, I-20126 Milano (IT); CAPRIO, Michela, I-20126 Milano (IT); TIRELLI, Diego, I-20126 Milano (IT); GALIMBERTI, Maurizio, I-20126 Milano (IT); CITTERIO, Attilio, I-20131 Milano (IT)
(74) Representative: Giannesi, Pier Giovanni
(86) International application number: PCT/EP2005/004564
(87) International publication number: WO 2006/114125

(56) References cited:
- EP-A- 0 896 981
- EP-A- 1 188 786
- EP-A- 1 241 204
- US-A- 4 574 140
- US-A1- 2002 061 955

## Description

The present invention relates to a tire and to a crosslinkable elastomeric composition.

More in particular the present invention relates to a tire including at least one structural element obtained by crosslinking a crosslinkable elastomeric composition comprising at least one elastomeric diene polymer, at least one silica reinforcing filler and at least one modified polycarboxylate.

In a further aspect, the present invention also relates to a crosslinkable elastomeric composition comprising at least one elastomeric diene polymer, at least one silica reinforcing filler and at least one modified polycarboxylates, as well as to a crosslinked manufactured article obtained by crosslinking said crosslinkable elastomeric composition.

In a still further aspect, the present invention also relates to a method for improving processability and storage stability of a crosslinkable silica filled elastomeric composition.

In the rubber industry, in particular in the manufacture of tyres, the use is known of elastomeric compositions wherein reinforcing fillers have been incorporated in the elastomeric polymer base, in order to improve the characteristics of the obtained crosslinked products, in particular mechanical properties and abrasion resistance. Thanks to its high reinforcing efficiency, carbon black is the most widely employed reinforcing filler. However, carbon black imparts to the crosslinked products marked hysteretic characteristics, i.e. an increase of heat dissipated in dynamic conditions (heat build-up), which, as is known, causes, in the case of a tyre, an increase in the rolling resistance of the tyre itself. This leads to an increase of the fuel consumption of the vehicles, and hence of both locomotion costs and air pollution. Efforts have been made to reduce such adverse effects by employing smaller amounts of carbon black and/or a carbon black having a smaller surface area. However, a reduction of the reinforcing action inevitably occurs, with a worsening of the mechanical properties and of the abrasion resistance of the final product.

In order to reduce the heat build-up of crosslinked products it is known to use the so-called "white" reinforcing fillers, such as gypsum, talc, kaolin, bentonite, titanium dioxide, silicates of various types and especially silica, which replaces carbon black either entirely or partly. In this regard, see for example European Patent EP 501,227.

However, the use of silica as reinforcing filler for elastomeric compositions has several shortcomings. One of the most apparent drawback is a scarce processability of the non-crosslinked compositions, mainly due to an excessive viscosity. Therefore, to achieve a good dispersion of silica in the elastomeric polymer base, an intense and prolonged thermo-mechanical kneading of the composition is necessary. Moreover, the silica particles, having a strong tendency to coalesce even when finely dispersed in the elastomeric polymer base, impair storage stability of the crosslinkable elastomeric compositions by forming agglomerates with a remarkable increase of the viscosity of said crosslinkable elastomeric compositions upon time. Finally, the acid moieties which are present on the silica surface may cause strong interactions with basic substances commonly employed in elastomeric compositions, such as vulcanization accelerators, thus impairing crosslinking efficiency.

To improve compatibility with the elastomeric polymer base, silica is usually blended with a coupling agent, for instance a sulfur-containing organosilane product, having two different moieties: the first moiety is able to interact with the silanol groups present on the silica surface, the second moiety promotes interaction with the sulfur-curable elastomeric polymer base. The use of a combination of silica and a silane coupling agent, while giving a remarkable beneficial effect on the elastomeric compositions reinforcement, sets, however, a limit to the maximum temperature that may be reached during the compounding step.

Other efforts have been made in the prior art to solve the above mentioned problems by adding, to the silica filled elastomeric compositions, compounding agents which should be able to act basically as surface treatment agents for the silica particles.

For instance, European Patent Application EP 801,112 discloses the use of polysiloxane compounds having alkoxysilyl and/or acyloxysilyl groups to increase storage stability of silica filled rubber compositions. The use of such polysiloxane compounds would avoid the problems due to generation of hydrogen gas and gelation deriving from the reaction of the Si-H residual groups commonly present in polysiloxane compounds. A silane coupling agent may be added. To accelerate the reaction between the above polysiloxane compound and/or the silane coupling agent with the silica surface silanol groups, a silanol condensation catalyst is added. This should result in a sufficient coating of the silica surface even using relatively low amounts of the above compounding agents.

European Patent Application EP 890,603 discloses the use, as processing aids to improve processability of silica filled diene elastomer compositions, of hydrogenated and non-hydrogenated fatty acid esters of C₅ and C₆ sugars, or polyoxyethylene derivatives thereof, preferably in the presence of a silane, such as octyltriethoxysilane. Other mineral fillers, such as talc or mica, are also added to inhibit re-agglomeration of silica.

In European Patent Application EP 890,606, a silica filled rubber stock of improved processability is prepared by mixing the rubber base with an amorphous silica filler, from 0% to less than about 1% by weight (based on said silica filler) of bis[3-(triethoxysilyl)propyl]tetrasulfide (Si69), an alkylalkoxysilane and a curing agent. The addition of a polyol or fatty acid ester as a processing aid is preferred to further reduce the amount of Si69.

In United States Patent US 5,717,022 other types of processing aids are suggested to improve processability of silica filled rubber compositions, having 1,2 or 1,3 diol groups, wherein at least two chemically bonded carbon atoms and their chemically bonded neighboring carbon atoms are not bound to oxygen atoms. Examples of such compounds are diols (e.g. 1,3-propandiol), polyols (e.g. glicerine) and esters of fatty acids with polyols. The use is also suggested of a partially acetalized polyvinylalcohol with a molecular weight lower than 600.

It is also known in the prior art to introduce hydrophilic polymers, e.g. polymers containing hydroxy groups, in elastomeric compositions, particularly in the elastomeric compositions used for the manufacture of tyre treads, in order to increase the road grip of the tyre, in particular on wet or iced grounds.

For instance, in Japanese Patent Application JP-H5-170976 a tyre is described which has an improved road grip on ice or snow grounds, wherein the tread includes short fibers and from 1 phr to 15 phr of powdered polyvinylalcohol (phr = parts by weight per 100 parts by weight of rubber). The fibers, for instance cellulose or synthetic polymer fibers, are oriented along the circumferential direction of the tyre, so as to impart anisotropic characteristics. Road grip on ice or snow surfaces would be improved by the presence of polyvinylalcohol particles which, when contacted with water, would dissolve, leaving in the tread cavities which increase roughness and hence road grip of the tread. The amount of polyvinyl alcohol powder should not exceed 15 phr, so as not to worsen wear resistance to an unacceptable extent. Besides, low amounts of polyvinylalcohol are necessary not to increase tread stiffness and therefore not to worsen the road grip on dry grounds. Polyvinylalcohol is always employed in rubber compositions containing carbon black as reinforcing filler.

In European Patent Application EP 896,981, an elastomeric composition for use in tyre tread manufacture is described, which includes modified polyvinylalcohol, in the form of powder or fibers. Such modified polyvinylalcohol has polyoxyalkylene groups along the chain, which increase water solubility of the polymer, hence promoting dissolution of the same when the tread gets in touch with a wet surface, leaving cavities in the tread itself and forming a sticky layer at the interface with the road surface which should increase the tyre road grip.

The use of hydrophilic polymers deriving from starch in elastomeric compositions is described in United States Patents US 5,374,671 and US 5,545,680. In particular, such patents describe elastomeric compositions comprising from 1 phr to 50 phr of a hydrophilic polymer having a glass transition temperature (Tg) ranging from 150°C to 0°C depending upon the absorbed amount of water. Such hydrophilic polymer is a destructured starch comprising amylose, amylopectine, or mixtures thereof. The presence of the destructured starch in a rubber composition for tyre treads is said to increase traction on wet grounds, while reducing at the same time rolling resistance on dry roads. The destructured starch may be homogeneously dispersed throughout the elastomeric matrix or, preferably, it is immiscible with the polymeric matrix so that it tends to form fibers, preferably oriented fibers, within said matrix. Since destructured starch is a hydrolyzable and biodegradable polymer, its presence in a tyre is said to increase its biodegradability. A grafting agent may be added to the rubber composition, in order to bind the hydrophilic polymer to the elastomeric base. No indications are given either about the grafting agent to be used, or on how to accomplish such grafting. Destructured starch may be compounded with silica, however no effects on processability or storage stability were reported.

United States Patent US 5,672,639 describes an elastomeric composition reinforced with a destructured starch combined with a plasticizer compatible with the destructured starch, so as to form a starch/plasticizer composite. With respect to destructured starch as such, said composite is said to have a better miscibility in the elastomeric matrix and would therefore prevent the formation of agglomerates of not dispersed starch. The plasticizer has a softening point lower than the softening point of destructured starch. In particular, poly(ethylene-vinylalcohol) having a softening point lower than 160°C, preferably comprised between 90° and 130°C, may be employed as a plasticizer. Other products which may be used as plasticizers include: ethylene/ vinylacetate copolymers, ethylene/glycidylacrylate copolymers and ethylene/maleic anhydride copolymers, cellulose acetate, diesters of dibasic organic acids, and the like. The addition of a coupling agent having a group which reacts with the hydroxyl groups of the composite and a group capable of interacting with the elastomeric matrix is suggested in order to couple the starch/plasticizer composite with the elastomeric matrix. To that aim, the use of coupling agents normally employed in silica-containing rubber compositions, in particular an organosilane tetrasulfide, is indicated. The destructured starch/ plasticizer composite may be compounded with silica, however no effects on processability or storage stability were reported.

International Patent Application WO 01/49786 in the name of the Applicant, describes a method for improving processability and storage stability of a silica filled elastomeric composition, said method comprising adding to said composition a thermoplastic polymer having a main hydrocarbon chain to which hydroxy groups are linked, said polymer having a weight-average molecular weight of at least 8,000. Preferably, said thermoplastic polymer is a polyvinylalcohol (PVA). Preferably, the method further comprises adding to the silica filled elastomeric composition a polymer containing functional groups reactive with said hydroxy groups. The polymer containing hydroxy groups is said to be highly effective in reducing and stabilizing viscosity of the composition, even when used in relatively low amounts, while maintaining or even enhancing the reinforcement effect of silica on the elastomeric composition. The resulting elastomeric composition is said to be particularly suitable to produce tyres, and particularly tyre treads.

In the Applicant's view, the compounding agents suggested in the prior art discussed above to improve processability of silica filled elastomeric compositions may give unsatisfactory results. For instance, polysiloxanes are in fact scarcely reactive with the silanol groups on the silica surface, therefore they may reduce the viscosity of the rubber compositions substantially by acting as plasticizers, their interaction with silica being very poor. The addition of a silanol condensation catalyst, as taught in European Patent EP 801,112, gives a scarce, or even negligible, improvement. Also the low molecular weight products containing hydroxyl groups suggested, for instance, in European Patent Application EP 890,603 and in United States Patent US 5,717,022, basically acts as plasticizers.

According to the Applicant's experience, the use of the above processing aids as plasticizers, while reducing the viscosity of the rubber compound, cause a remarkable reduction of the reinforcement effect of silica, thus resulting in a worsening of mechanical properties (both static and dynamic) of the crosslinked articles obtained therefrom.

The Applicant has now found that silica filled crosslinkable elastomeric compositions having improved processability and storage stability may be obtained by adding to said compositions at least one modified polycarboxylate as defined hereinbelow. Said modified polycarboxylate is highly effective in reducing and stabilizing viscosity of the crosslinkable elastomeric compositions while maintaining the reinforcement effect of silica on the obtained crosslinked elastomeric compositions. Consequently, the use of said modified polycarboxylate does not negatively affect the mechanical properties (both static and dynamic) of the obtained crosslinked elastomeric compositions.

According to a first aspect, the present invention relates to a tire comprising at least one structural element including a crosslinked elastomeric material obtained by crosslinking a crosslinkable elastomeric compositon comprising:
(a) at least one diene elastomeric polymer;
(b) at least one silica reinforcing filler;
(c) at least one copolymer of at least one ethylenically unsaturated carboxylic acid or a derivative thereof with at least one ethylenically unsaturated monomer containing at least one polyoxyalkylene side chain.

According to one preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

According to a further aspect, the present invention relates to a crosslinkable elastomeric composition comprising:
(a) at least one diene elastomeric polymer;
(b) at least one silica reinforcing filler;
(c) at least one copolymer of at least one ethylenically unsaturated carboxylic acid or a derivative thereof with at least one ethylenically unsaturated monomer containing at least one polyoxyalkylene side chain.

According to one preferred embodiment, said crosslinkable elastomeric composition may further comprise (d) at least one silane coupling agent.

According to a further preferred embodiment, said crosslinkable elastomeric composition may further comprise (e) at least one polyoxyalkylene glycol.

According to a further preferred embodiment, said crosslinkable elastomeric composition may further comprise (f) at least one condensation catalyst.

For the purposes of the present description and of the claims which follow, the term "phr" means the parts by weight of a given component of the crosslinkable elastomeric composition per 100 parts by weight of the diene elastomeric polymer.

According to a still further aspect, the present invention relates to a crosslinked manufactured article obtained by crosslinking the crosslinkable elastomeric composition above reported.

According to a still further aspect, the present invention relates to a method for improving processability and storage stability of a silica filled crosslinkable elastomeric composition, said method comprising mixing at least one diene elastomeric polymer (a) with at least one silica reinforcing filler (b), characterized in that said method further comprises adding to said elastomeric composition at least one copolymer of at least one ethylenically unsaturated carboxylic acid or a derivative thereof with at least one ethylenically unsaturated monomer containing at least one polyoxyalkylene side chain.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein..

According to one preferred embodiment; the diene elastomeric polymer (a) may be selected from those commonly used in sulfur-crosslinkable elastomeric materials, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, said crosslinkable elastomeric composition comprises at least 10% by weight, preferably from 20% by weight to 100% by weight, with respect to the total weight of said at least one diene elastomeric polymer (a), of at least one copolymer selected from: styrene/1,3-butadiene copolymers, styrene/isoprene/1,3-butadiene copolymers, styrene/1,3-butadiene/acrylonitrile copolymers, or mixtures thereof.

According to a further preferred embodiment, said crosslinkable elastomeric composition comprises:
- from 50% by weight to 90% by weight, preferably from 60% by weight to 80% by weight, with respect to the total weight of said at least one diene elastomeric polymer (a), of at least one styrene/1,3-butadiene copolymers;
- from 10% by weight to 50% by weight, preferably from 20% by weight to 40% by weight, with respect to the total weight of said at least one diene elastomeric polymer (a), of at least one polybutadiene with a high 1,4 cis content, usually higher than 90%, and a low vinyl content, usually lower than 5%.

The above reported crosslinkable elastomeric composition may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

The above reported crosslinkable elastomeric composition may optionally comprise at least one diene elastomeric polymer functionalized by reaction with suitable terminating agents or coupling agents. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 and US 4,550,142).

The elastomeric polymers useful according to the present invention, may optionally include at least one functional group selected from carboxylic groups, carboxylate groups, anhydride groups, ester groups, epoxy groups, may also be used.

Preferably, said elastomeric polymers include from 0.05% by weight to 10% by weight, preferably from 0.1% by weight to 5% by weight, with respect to the total weight of the elastomeric polymer of said at least one functional group selected from carboxylic groups, carboxylate groups, anhydride groups, ester groups.

In the case of the epoxy groups, said elastomeric polymers preferably include less than 10 mol%, preferably from 0.1 mol% to 5 mol%, of epoxy groups with respect to the total number of moles of monomers present in the elastomeric polymer.

Said functional group may be introduced into the elastomeric polymers by means of processes known in the art such as, for example, during the production of the elastomeric polymers by co-polymerization with at least one corresponding functionalized monomer containing at least one ethylenic unsaturation; or by subsequent modification of the elastomeric polymers by grafting said at least one functionalized monomer in the presence of a free radical initiator (for example, an organic peroxide).

Functionalized monomers which may be advantageously used include, for example, monocarboxylic or dicarboxylic acids containing at least one ethylenic unsaturation or derivatives thereof, in particular salts, anhydrides or esters.

Examples of monocarboxylic or dicarboxylic acids containing at least one ethylenic unsaturation or derivatives thereof are: maleic acid, fumaric acid, citraconic acid, itaconic acid, acrylic acid, methacrylic acid, and salts, anhydrides or esters derived therefrom, or mixtures thereof. Maleic anhydride is particularly preferred.

With regard to the epoxy groups, the epoxy groups may be introduced during the production of the elastomeric polymers, by co-polymerization with at least one epoxy compound containing at least one ethylenic unsaturation. Examples of epoxy compounds containing at least one ethylenic unsaturation are: glycidyl acrylate, glycidyl methacrylate, itaconic acid monoglycidyl ester, maleic acid glycidyl ester, vinylglycidyl ether, allylglycidyl ether, or mixtures thereof.

Alternatively, it is possible to introduce the epoxy groups by reacting the elastomeric polymers, in solution, with at least one epoxidizing agent. This epoxidizing agent is, generally, a peroxide, a peracid or a derivative thereof, in particular a salt thereof such as, for example, performic acid, perpropionic acid, peracetic acid, m-chloroperbenzoic acid, metal salts of peroxybenzoic acid (such as, for example, magnesium bis(2-carboxylate-monoperoxybenzoic acid)hexahydrate) or, alternatively, hydrogen peroxide in the presence of a carboxylic acid or a derivative thereof, in particular anhydrides (such as, for example, acetic acid, formic acid, propionic acid, acetic anhydride), optionally mixed with an acid catalyst (for example, sulfuric acid).

Further details regarding processes for epoxidizing elastomeric polymers are disclosed, for example, in United States Patent US 4,341,672 or by Schulz et al. in "Rubber Chemistry and Technology", Vol. 55, pages 809 et seq.

According to one preferred embodiment, the silica reinforcing filler (b) may be selected from precipitated amorphous silica, wet silica (hydrated silicic acid), dry silica (anhydrous silicic acid), fumed silica, .calcium silicate, aluminum silicate, magnesium silicate, or mixtures thereof. Precipitated amorphous silica, hydrated silica, are preferred, in particular those having a BET surface area (measured according to ISO standard 5794/1) of from 50 m²/g to 500 m²/g, preferably of from 70 m²/g to 200 m²/g.

According to one preferred embodiment, said silica reinforcing filler (b) is present in the crosslinkable elastomeric composition in an amount of from 10 phr to 120 phr, preferably of from 20 phr to 90 phr.

According to one preferred embodiment said copolymer of at least one ethylenically unsaturated carboxylic acid or a derivative thereof with at least one ethylenically unsaturated monomer containing at least one polyoxyalkylene side chain (c) may be selected from compounds having the following general formula (I): 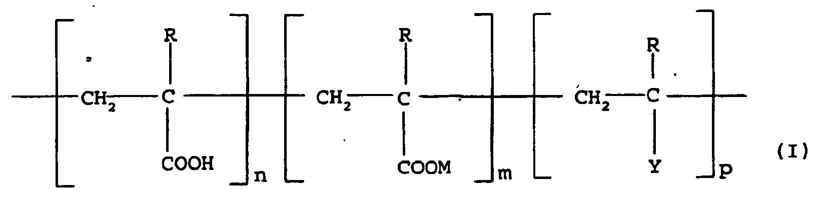 wherein:
- R represents a hydrogen atom or a linear or branched C₁-C₄ alkyl group, preferably a methyl group;
- M represents a monovalent or a divalent cation, preferably:
   - an alkali metal cation, more preferably sodium or potassium;
   - an alkaline-earth metal cation, more preferably calcium;
   - an ammonium cation having formula N(R₁)₄ wherein R₁ groups, which may be equal or different from each other, are selected from: hydrogen atoms, linear or branched C₁-C₁₈ alkyl groups, C₆-C₁₈ aryl groups, C₇-C₂₁ arylalkyl or alkylaryl groups, more preferably NH₄;
   - a zinc cation;
- n is an integer of from 0 to 20, preferably of from 1 to 10, extremes included;
- m and p, which may be equal or different from each other, are an integer of from 1 to 20, preferably of from 2 to 10, extremes included;
- Y represents one of the groups having the following general formulae (II), (III) or (IV): 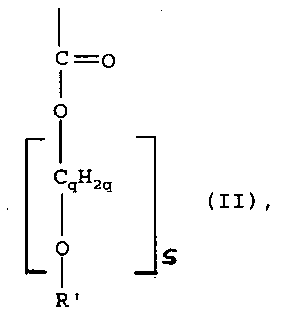 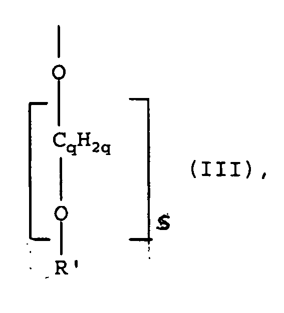 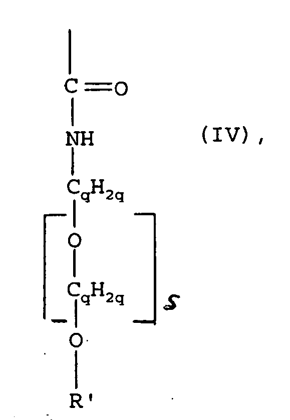
wherein:
- R has the same meanings as above reported;
- R' represents a hydrogen atom; a linear or branched C₁-C₁₀ alkyl group, preferably a methyl group; a R" -SO₃M group, wherein R" represents a linear or branched C₂-C₁₀ alkylene group, preferably a methylene group, and M has the same meanings as above reported;
- q is an integer of from 1 to 10, preferably of from 1 to 5, extremes included;
- s is an integer of from 1 to 100, preferably of from 4 to 50, extremes included.

According to one preferred embodiment, said copolymer of at least one ethylenically unsaturated carboxylic acid or a derivative thereof with at least one ethylenically unsaturated monomer containing at least one polyoxyalkylene side chain (c) has a weight-average molecular weight (Mw) of from 500 to 100,000, preferably of from 1,000 to 50,000, more preferably of from 2,000 to 30,000. Said weight average molecular weight (M_{w}) may be determined according to known techniques such as, for example, by gel permeation chromatography (GPC).

The copolymer of at least one ethylenically unsaturated carboxylic acid or a derivative thereof with at least one ethylenically unsaturated monomer containing at least one polyoxyalkylene side chain (c) above reported may be obtained by processes known in the art. For example, said copolymer may be obtained by the free-radical polymerization of about 1 wt% to 99 wt% of at least one unsaturated monocarboxylic or dicarboxylic acid or a derivative thereof (such as, for example, (meth)acrylic acid, maleic acid, .maleic anhydride), with about 99 wt% to 1 wt% of at least one compound having the following general formula (V): 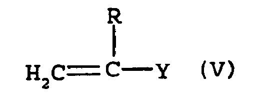 wherein R and Y have the same meanings as above reported.

The copolymers so obtained may be further reacted with alkali metal hydroxides, alkaline-earth metal hydroxides, zinc hydroxide, or ammonium compounds.

Said copolymers may be terminated with hydrogen atoms or residues of the polymerization iniziators usually used such as, for example, peroxides, persulfates, azo-type iniziators.

Further details about the processes for producing said copolymers may be found, for example, in International Patent Application WO 03/106369, in United States Patents US 5,798,425 and US 5,632,324, or in United States Patent Application US 2003/0144384.

According to one preferred embodiment, said copolymer of at least one ethylenically unsaturated carboxylic acid or a derivative thereof with at least one ethylenically unsaturated monomer containing at least one polyoxyalkylene side chain (c) is present in the crosslinkable elastomeric composition in an amount of from 0,2 phr to 10 phr, preferably of from 1 phr to 5 phr.

Examples of copolymers of at least one ethylenically unsaturated carboxylic acid or a derivative thereof with at least one ethylenically unsaturated monomer containing at least one polyoxyalkylene side chain (c) which may be used in the present invention and which are currently commercially available are the products Melflux^{®} from Degussa (in particular, Melflux^{®} PP100, Melflux^{®} 2651, Melflux^{®} 1641), Narlex^{®} from Alco Chemical, Peramin^{®} Conpac S149 from Perstorp.

As disclosed above, said crosslinkable elastomeric composition may further comprise (d) at least one silane coupling agent capable of interacting with the silica and of linking it to the elastomeric polymer during the vulcanization.

Coupling agents that are preferably used are those based on silane which may be identified, for example, by the following structural formula (VI):

(R₂)₃Si-CₜH₂ₜ-X (VI)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer between 1 and 6 extremes included; X is a group selected from: nitroso, mercapto, amino, epoxide, vinyl, imide, chloro, -(S)ᵤCₜH₂ₜ-Si-(R₂)₃ or or-S-COR₂ in which u and t are integers of from 1 to 6 extremes included and the groups R₂ are defined as reported above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the crosslinkable elastomeric composition.

According to one preferred embodiment, said silane coupling agent is present in the crosslinkable elastomeric composition in an amount of from 0 phr to 10 phr, preferably of from 0.5 phr to 5 phr.

As reported above, said crosslinkable elastomeric composition may further comprise (e) at least one polyoxyalkylene glycol. Preferably, said polyoxyalkylene glycol may be selected, for example, from polyoxyethylene glycol, polyoxypropylene glycol, or mixtures thereof. Polyoxyethylene glycol is particularly preferred.

According to one preferred embodiment, said polyoxyalkylene glycol is present in the crosslinkable elastomeric composition in an amount of from 0 phr to 10 phr, preferably of from 0.5 phr to 5 phr.

As reported above, in order to improve the abrasion resistance, said crosslinkable elastomeric composition may further comprise (f) at least one condensation catalyst.

According to one preferred embodiment, said condensation catalyst may be selected, for example, from: metal carboxylates; arylsulphonic acids or derivatives thererof; amines and alkanolamines; strong inorganic acids or bases; organic acids; blocked acids; zeolites modified by reaction with at least one carboxylic acid and/or sulphonic acid; or mixtures thereof. Metal carboxylates are particularly preferred, dibutyltin dilaurate is still particularly preferred.

A more detailed description of said condensation catalysts may be foundm for example, in European Patent Application EP 1,252,230.

According to one preferred embodiment, said condensation catalyst is present in the crosslinkable elastomeric composition in an amount of from 0 phr to 5 phr, preferably of from 0.05 phr to 3 phr.

At least one additional reinforcing filler may advantageously be added to the above reported crosslinkable elastomeric composition, in an amount generally of from 0 phr to 120 phr, preferably of from 20 phr to 90 phr. The reinforcing filler may be selected from those commonly used for crosslinked manufactured articles, in particular for tires, such as, for example, carbon black, alumina, calcium carbonate, kaolin, or mixtures thereof. Carbon black is particularly preferred.

The types of carbon black which may be used according to the present invention may be selected from those conventionally used in the production of tyres, generally having a surface area of not less than 20 m²/g (determined by CTAB absorption as described in ISO standard 6810).

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, antiozonants (in particular of the p-phenylenediamine type), waxes, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from 0 phr to 70 phr, preferably of from of 5 phr to 30 phr.

The above reported crosslinkable elastomeric composition may be prepared by mixing together the elastomeric base components, the silica reinforcing filler and the copolymer (c), with the other reinforcing fillers and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

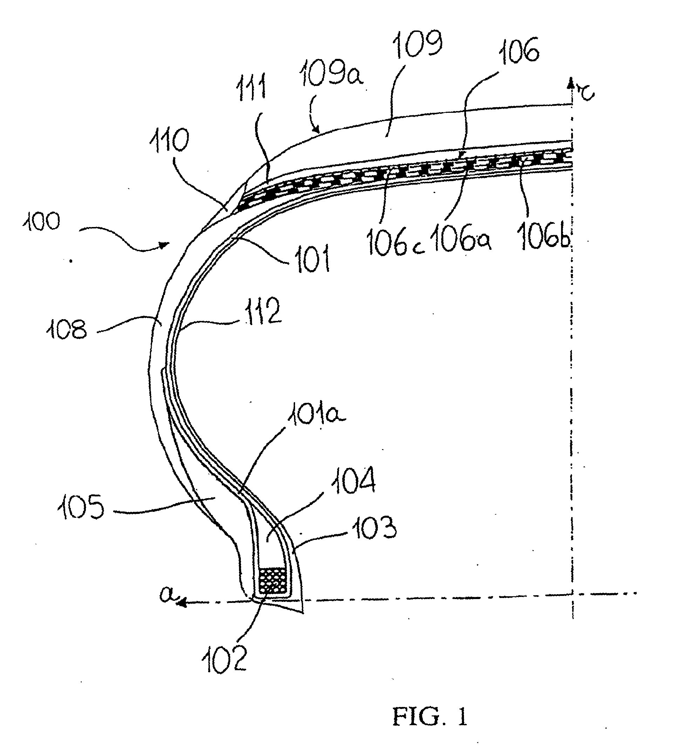

The present invention will now be illustrated in further detail by means of a number of illustrative embodiments, with reference to the attached Fig. 1 which are a view in cross section of a portion of a tire made according to the invention. "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A side wall (108) is also applied externally onto the carcass ply (101), this side wall extending, in an axially external position, from the bead (103) to the end of the belt structure (106).

A tread band (109), which may be made according to the present invention, whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

The process for producing the tire according to the present invention may be carried out according to techniques and using apparatus that are known in the art, as described, for example, in European Patents EP 199,064, or in United States Patents US 4,872,822 and US 4,768,937, said process including at least one stage of manufacturing the crude tire and at least one stage of vulcanizing this tire.

More particularly, the process for producing the tire comprises the steps of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization step welds the abovementioned semi-finished products together to give a monolithic block, i.e. the finished tire.

The step of preparing the abovementioned semi-finished products will be preceded by a step of preparing and moulding the various crosslikable elastomeric compositions, of which said semi-finished products are made, according to conventional techniques.

The crude tire thus obtained is then passed to the subsequent steps of moulding and vulcanization. To this end, a vulcanization mould is used which is designed to receive the tire being processed inside a moulding cavity having walls which are countermoulded to define the outer surface of the tire when the vulcanization is complete.

Alternative processes for producing a tire or parts of a tire without using semi-finished products are disclosed, for example, in the abovementioned European Patent Applications EP 928,680 and EP 928,702.

The crude tire can be moulded by introducing a pressurized fluid into the space defined by the inner surface of the tire, so as to press the outer surface of the crude tire against the walls of the moulding cavity. In one of the moulding methods widely practised, a vulcanization chamber made of elastomeric material, filled with steam and/or another fluid under pressure, is inflated inside the tire closed inside the moulding cavity. In this way, the crude tire is pushed against the inner walls of the moulding cavity, thus obtaining the desired moulding. Alternatively, the moulding may be carried out without an inflatable vulcanization chamber, by providing inside the tire a toroidal metal support shaped according to the configuration of the inner surface of the tire to be obtained as described, for example, in Europen Patent EP 1,189,744.

At this point, the step of vulcanizing the crude tire is carried out. To this end, the outer wall of the vulcanization mould is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the moulding cavity, heated to a maximum temperature of from 100°C to 250°C. The time required to obtain a satisfactory degree of vulcanization throughout the mass of the elastomeric material may vary in general of from 3 min to 90 min and depends mainly on the dimensions of the tire. When the vulcanization is complete, the tire is removed from the vulcanization mould.

The present invention will be further illustrated below by means of a number of preparation examples, which are given for purely indicative purposes and without any limitation of this invention.

### EXAMPLES 1-4

### Preparation of the elastomeric compositions

The elastomeric compositions given in Table 1 were prepared as follows (the amounts of the various components are given in phr).

All the components, except sulfur and accelerators (DPG, CBS), were mixed together in an internal mixer (model Pomini PL 1.6) for about 5 min (1^{st} Step) . As soon as the temperature reached 145±5°C, the elastomeric composition was discharged. The sulfur and accelerators (DPG, CBS), were then added and mixing was carried out in an open roll mixer (2^{nd} Step).

**TABLE 1**

| EXAMPLE | 1 (*) | 2 | 3 | 4 |
|---|---|---|---|---|
| 1^{st} STEP TEP | | | | |
| SBR | 90.0 | 90.0 | 90.0 | 90.0 |
| BR | 35.0 | 35.0 | 35.0 | 35.0 |
| Silica | 70.0 | 70.0 | 70.0 | 70.0 |
| X50S^{®} | 11.2 | 11.2 | 11.2 | 11.2 |
| Zinc oxide | 2.5 | 2.5 | 2.5 | 2.5 |
| Stearic acid | 2.0 | 2.0 | 2.0 | 2.0 |
| Microcrystalline wax | 1.0 | 1.0 | 1.0 | 1.0 |
| Aromatic oil | 8.0 | 8.0 | 8.0 | 8.0 |
| 6-PPD | 2.0 | 2.0 | 2.0 | 2.0 |
| Melflux^{®} PP100 | | 2.8 | | |
| Melflux^{®} 2651 | | | 2.8 | |
| Melflux^{®} 1641 | | | | 2.8 |

| 2^{nd} STEP TEP | | | | |
|---|---|---|---|---|
| CBS | 2.0 | 2.0 | 2.0 | 2.0 |
| DPG | 2.0 | 2.0 | 2.0 | 2.0 |
| Sulfur | 1.2 | 1.2 | 1.2 | 1.2 |

| | | | | |
|---|---|---|---|---|
| (*): comparative. SBR: styrene/1,3-butadiene copolymer, obtained by emulsion polymerization, containing 40% by weight of styrene, mixed with 37.5 phr of extension oil (SBR 1721 from Bayer - the reported amount relates to the total amount of styrene/1,3-butadiene + extension oil); BR: cis-1,4-polybutadiene (Europrene^{®} Neocis BR40 - Polimeri Europa); Silica: precipitated silica (Zeosil^{®} 1165 MP - Rhone-Poulenc); X50S^{®}: silane coupling agent comprising 50% by weight of carbon black and 50% by weight of bis(3-triethoxysilylpropyl) tetrasulphide (Degussa-Hüls - the reported amount relates to the total amount of silane + carbon black); 6-PPD: N-(1,3-dimethylbutyl)-N'-phenyl-p-phenylenediamine; Melflux^{®} PP100: copolymer of partially salified (meth)acrylic acid monomers with ethylenically unsaturated monomers containing polyoxyethylene side chains (Degussa); Melflux^{®} 2651: copolymer of partially salified (meth)acrylic acid monomers with ethylenically unsaturated monomers containing polyoxyethylene and polyoxypropylene side chains (Degussa); Melflux^{®} 1641: copolymer of partially salified (meth)acrylic acid monomers with ethylenically unsaturated monomers containing polyoxyethylene and polyoxypropylene side chains (Degussa); CBS (accelerator): N-cyclohexyl-2-benzothiazyl sulphenamide (Vulkacit^{®} CZ - Bayer); DPG (accelerator): diphenylguanidine (Vulkacit^{®} D - Bayer) . | | | | |

The Mooney viscosity ML(1+4) at 100°C was measured after 0 days and after 60 days of storage at room temperature (23°C) according to Standard ISO 289-1:1994, on the non-crosslinked elastomeric compositions obtained as described above. The results obtained are given in Table 2.

The elastomeric compositions obtained as reported above were also submitted to MDR rheometric analysis utilizing a Monsanto MDR rheometer, carrying out the test at 170°C for 30 min with an oscillation amplitude of ± 0.5°. The results obtained are given in Table 2.

The static mechanical properties according to Standard ISO 37:1994 as well as hardness in IRHD degrees (at 23°C and at 100°C) according to ISO standard 48:1994, were measured on samples of the abovementioned elastomeric compositions vulcanized at 170°C for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E') .

**TABLE 2**

| EXAMPLE | 1 (*) | 2 | 3 | 4 |
|---|---|---|---|---|
| Mooney viscosity ML(1+4) | | | | |
| after 0 days | 62.5 | 45.7 | 54.9 | 52.7 |
| after 60 days | 77.3 | 51.3 | 59.9 | 59.3 |

| MDR RHEOMETRIC ANALYSYS | | | | |
|---|---|---|---|---|
| Max torque (dN.m) | 19.25 | 19.98 | 20.27 | 20.79 |
| Min torque (dN.m) | 2.88 | 1.64 | 2.46 | 2.32 |
| Δtorque (dN.m) | 16.37 | 18.34 | 17.81 | 18.47 |

| STATIC MECHANICAL PROPERTIES | | | | |
|---|---|---|---|---|
| 100% Modulus (MPa) | 1.98 | 2.06 | 2.06 | 2.01 |
| 300% Modulus (MPa) | 8.76 | 9.27 | 9.35 | 9.34 |
| Stress at break (MPa) | 20.88 | 20.63 | 21.19 | 20.48 |
| Elongation at break (%) | 607.7 | 587.7 | 594.7 | 583.4 |

| DYNAMIC MECHANICAL PROPERTIES IES | | | | |
|---|---|---|---|---|
| E' (23°C) (Mpa) | 8.869 | 9.675 | 9.525 | 9.312 |
| E' (70°C) (Mpa) | 5.869 | 6.185 | 6.232 | 6.065 |
| Tan delta (23°C) | 0.290 | 0.302 | 0.303 | 0.301 |
| Tan delta (70°C) | 0.147 | 0.158 | 0.138 | 0.142 |
| IRHD Hardness (23°C) | 72.7 | 73.7 | 74.9 | 74.3 |
| IRHD Hardness (100°C) | 63.3 | 65.1 | 65.6 | 66.4 |

| | | | | |
|---|---|---|---|---|
| (*): comparative. | | | | |

## Claims

1. Tire comprising at least one structural element including a crosslinked elastomeric material obtained by crosslinking a crosslinkable elastomeric compositon comprising:
(a) at least one diene elastomeric polymer;
(b) at least one silica reinforcing filler;
(c) at least one copolymer of at least one ethylenically unsaturated carboxylic acid or a derivative thereof with at least one ethylenically unsaturated monomer containing at least one polyoxyalkylene side chain.

2. Tire according to claim 1, comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is the tread band.

3. Tire according to claim 1 or 2, wherein said diene elastomeric polymer (a) has a glass transition temperature below 20°C.

4. Tire according to claim 3, wherein said diene elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

5. Tire according to any one of the preceding claims, wherein said crosslinkable elastomeric composition comprises at least 10% by weight with respect to the total weight of said at least one diene elastomeric polymer (a), of at least one copolymer selected from: styrene/1,3-butadiene copolymers, styrene/isoprene/1,3-butadiene copolymers, styrene/1,3-butadiene/acrylonitrile copolymers, or mixtures thereof.

6. Tire according to claim 5, wherein said crosslinkable elastomeric composition comprises from 20% by weight to 100% by weight with respect to the total weight of said at least one diene elastomeric polymer (a), of at least one copolymer selected from: styrene/1,3-butadiene copolymers, styrene/isoprene/1,3-butadiene copolymers, styrene/1,3-butadiene/acrylonitrile copolymers, or mixtures thereof.

7. Tire according to any one of the preceding claims, wherein said crosslinkable elastomeric composition comprises:
- from 50% by weight to 90% by weight with respect to the total weight of said at least one diene elastomeric polymer (a) of at least one styrene/1,3-butadiene copolymers;
- from 10% by weight to 50% by weight with respect to the total weight of said at least one diene elastomeric polymer (a) of at least one polybutadiene with a high 1,4 cis content and a low vinyl content.

8. Tire according to any one of the preceding claims, wherein said crosslinkable elastomeric composition further comprises at least one elastomeric polymer of one or more monoolefins with an olefinic comonomer or derivatives thereof (a').

9. Tire according to claim 8, wherein said elastomeric polymer (a') is selected from: ethylene/propylene copolymers (EPR) or ethylene/propylene/diene copolymers (EPDM); polyisobutene; butyl rubbers; halobutyl rubbers; or mixtures thereof.

10. Tire according to any one of claims 3 to 9, wherein said elastomeric polymers include at least one functional group selected from carboxylic groups, carboxylate groups, anhydride groups, ester groups, epoxy groups.

11. Tire according to any one of the preceding claims, wherein said silica reinforcing filler (b) is selected from precipitated amorphous silica, wet silica (hydrated silicic acid), dry silica (anhydrous silicic acid), fumed silica, calcium silicate, aluminum silicate, magnesium silicate, or mixtures thereof.

12. Tire according to any one of the preceding claims, wherein said silica reinforcing filler (b) is present in said crosslinkable elastomeric composition in an amount of from 10 phr to 120 phr.

13. Tire according to claim 12, wherein said silica reinforcing filler (b) is present in said crosslinkable elastomeric composition in an amount of from 20 phr to 90 phr.

14. Tire according to any one of the preceding claims, wherein said copolymer of at least one ethylenically unsaturated carboxylic acid or a derivative thereof with at least one ethylenically unsaturated monomer containing at least one polyoxyalkylene side chain (c) is selected from compounds having the following general formula (I) : 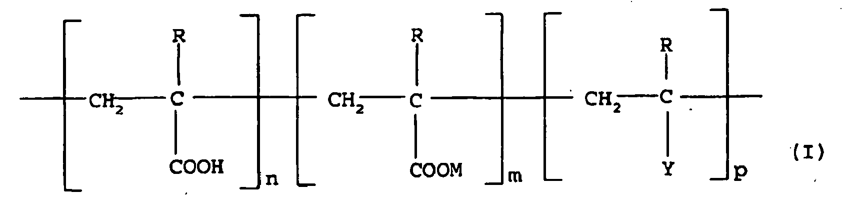 wherein:
- R represents a hydrogen atom or a linear or branched C₁-C₄ alkyl group;
- M represents a monovalent or a divalent cation;
- n is an integer of from 0 to 20 extremes included;
- m and p, which may be equal or different from each other, are an integer of from 1 to 20 extremes included;
- Y represents one of the groups having the following general formulae (II), (III) or (IV): 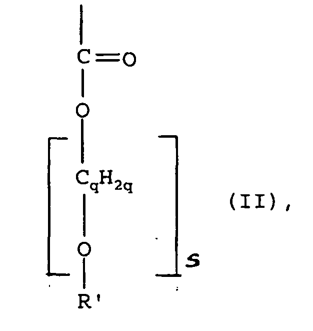 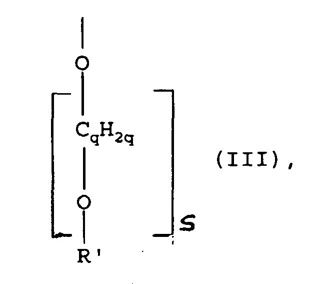 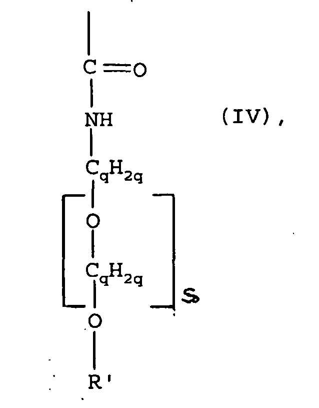
wherein:
- R has the same meanings as above reported;
- R' represents a hydrogen atom; a linear or branched C₁-C₁₀ alkyl group; a R" -SO₃M group,
wherein R" represents a linear or branched C₂-C₁₀ alkylene group and M has the same meanings as above reported;
- q is an integer of from 1 to 10 extremes included;
- s is an integer of from 1 to 100 extremes included.

15. Tire according to claim 14, wherein in said compounds having general formula (I) M represents:
- an alkali metal cation;
- an alkaline-earth metal cation;
- an ammonium cation having formula N(R₁)₄ wherein R₁ groups, which may be equal or different from each other, are selected from: hydrogen atoms, linear or branched C₁-C₁₈ alkyl groups, C₆-C₁₈ aryl groups, C₇-C₂₁ arylalkyl or alkylaryl groups;
- a zinc cation.

16. Tire according to any one of the preceding claims, wherein said copolymer of at least one ethylenically unsaturated carboxylic acid or a derivative thereof with at least one ethylenically unsaturated monomer containing at least one polyoxyalkylene side chain (c) has a weight-average molecular weight (Mw) of from 500 to 100,000.

17. Tire according to claim 16, wherein said copolymer of at least one ethylenically unsaturated carboxylic acid or a derivative thereof with at least one ethylenically unsaturated monomer containing at least one polyoxyalkylene side chain (c) has a weight-average molecular weight (Mw) of from 1,000 to 50,000.

18. Tire according to claim 17, wherein said copolymer of at least one ethylenically unsaturated carboxylic acid or a derivative thereof with at least one ethylenically unsaturated monomer containing at least one polyoxyalkylene side chain (c) has a weight-average molecular weight (Mw) of from 2,000 to 30,000.

19. Tire according to any one of the preceding claims, wherein said copolymer of at least one ethylenically unsaturated carboxylic acid or a derivative thereof with at least one ethylenically unsaturated monomer containing at least one polyoxyalkylene side chain (c) is present in said crosslinkable elastomeric composition in an amount of from 0,2 phr to 10 phr.

20. Tire according to claim 19, wherein said copolymer of at least one ethylenically unsaturated carboxylic acid or a derivative thereof with at least one ethylenically unsaturated monomer containing at least one polyoxyalkylene side chain (c) is present in said crosslinkable elastomeric composition in an amount of from 1 phr to 5 phr.

21. Tire according to any one of the preceding claims, wherein said crosslinkable elastomeric composition further comprise (d) at least one silane coupling agent based on silane which may be identified, for example, by the following structural formula (VI):
(R₂)₃Si-CₜH₂ₜ-X (VI)
wherein the groups R₂, which may be identical or different, are selected from: alkyl, alkoxy or aryloxy groups or from halogen atoms, on condition that at least one of the groups R₂ is an alkoxy or aryloxy group; t is an integer between 1 and 6 extremes included; X is a group selected from: nitroso, mercapto, amino, epoxide, vinyl, imide, chloro,-(S)ᵤCₜH₂ₜ-Si-(R₂)₃ or or -S-COR₂ in which u and t are integers of from 1 to 6 extremes included and the groups R₂ are defined as reported above.

22. Tire according to claim 21, wherein said silane coupling agent is present in said crosslinkable elastomeric composition in an amount of from 0 phr to 10 phr.

23. Tire according to claim 22, wherein said silane coupling agent is present in said crosslinkable elastomeric composition in an amount of from 0.5 phr to 5 phr.

24. Tire according to any one of the preceding claims, wherein said crosslinkable elastomeric composition further comprises (e) at least one polyoxyalkylene glycol.

25. Tire according to claim 24, wherein said polyoxyalkylene glycol is selected from polyoxyethylene glycol, polyoxypropylene glycol, or mixtures thereof.

26. Tire according to claim 24 or 25, wherein said polyoxyalkylene glycol is present in said crosslinkable elastomeric composition in an amount of from 0 phr to 10 phr.

27. Tire according to claim 26, wherein said polyoxyalkylene glycol is present in said crosslinkable elastomeric composition in an amount of from 0.5 phr to 5 phr.

28. Tire according to any one of the preceding claims, wherein said crosslinkable elastomeric composition further comprises (f) at least one condensation catalyst selected from: metal carboxylates; arylsulphonic acids or derivatives thererof; amines and alkanolamines; strong inorganic acids or bases; organic acids; blocked acids; zeolites modified by reaction with at least one carboxylic acid and/or sulphonic acid; or mixtures thereof.

29. Tire according to claim 28, wherein said condensation catalyst is present in said crosslinkable elastomeric composition in an amount of from 0 phr to 5 phr.

30. Tire according to claim 29, wherein said condensation catalyst is present in said crosslinkable elastomeric composition in an amount of from 0.05 phr to 3 phr.

31. Tire according to any one of the preceding claims, wherein said crosslinkable elastomeric composition comprises from 0 phr to 120 phr of at least one additional reinforcing filler.

32. Tire according to claim 31, wherein said crosslinkable elastomeric composition comprises from 20 phr to 90 phr of at least one additional reiforcing filler.

33. Tire according to claim 31 or 32, wherein said additional crosslinking filler is carbon black.

34. Crosslinkable elastomeric composition comprising:
(a) at least one diene elastomeric polymer;
(b) at least one silica reinforcing filler;
(c) at least one copolymer of at least one ethylenically unsaturated carboxylic acid or a derivative thereof with at least one ethylenically unsaturated monomer containing at least one polyoxyalkylene side chain (c).

35. Crosslinkable elastomeric composition according to claim 34, wherein said diene elastomeric polymer (a) is defined according to any one of claims 3 to 7.

36. Crosslinkable elastomeric composition according to claim 34 or 35, further comprising at least one elastomeric polymer (a') which is defined according to claim 9.

37. Crosslinkable elastomeric composition according to any one of claims 34 to 36, wherein said elastomeric polymers include at least one functional group selected from carboxylic groups, carboxylate groups, anhydride groups, ester groups, epoxy groups.

38. Crosslinkable elastomeric composition according to any one of claims 34 to 37, wherein said silica reinforcing filler (b) is defined according to any one of claims 11 to 13.

39. Crosslinkable elastomeric composition according to any one of claims 34 to 38, wherein said copolymer of at least one ethylenically unsaturated carboxylic acid or a derivative thereof with at least one ethylenically unsaturated monomer containing at least one polyoxyalkylene side chain (c) is defined according to any one of claims 14 to 20.

40. Crosslinkable elastomeric composition according to any one of claims 34 to 39, further comprising at least one silane coupling agent (d) which is defined according to any one of claims 21 to 23.

41. Crosslinkable elastomeric composition according to any one of claims 34 to 40, further comprising at least one polyoxyalkylene glycol (e) which is defined according to any one of claims 24 to 27.

42. Crosslinkable elastomeric composition according to any one of claims 34 to 41, further comprising at least one condensation catalyst (f) which is defined according to any one of claims 28 to 30.

43. Crosslinkable elastomeric composition according to any one of claims 34 to 42, further comprising from 0 phr to 120 phr of at least one additional reinforcing filler.

44. Crosslinkable elastomeric composition according to claim 43, further comprising from 20 phr to 90 phr of at least one additional reiforcing filler.

45. Crosslinkable elastomeric composition according to claim 43 or 44, wherein said additional crosslinking filler is carbon black.

46. Crosslinked manufactured article obtained by crosslinking the crosslinkable elastomeric composition according to any one of claims 34 to 45.

47. Method for improving processability and storage stability of a silica filled crosslinkable elastomeric composition, said method comprising mixing at least one diene elastomeric polymer (a) with at least one silica reinforcing filler (b), **characterized in that** said method further comprises adding to said elastomeric composition at least one copolymer of at least one ethylenically unsaturated carboxylic acid or a derivative thereof with at least one ethylenically unsaturated monomer containing at least one polyoxyalkylene side chain (c).

48. Method according to claim 47, wherein said diene elastomeric polymer (a) is defined according to any one of claims 3 to 7.

49. Method according to claim 47 or 48, wherein said crosslinkable elastomeric composition further comprises at least one elastomeric polymer (a') which is defined according to claim 9.

50. Method according to any one of claims 47 to 49, wherein said elastomeric polymers include at least one functional group selected from carboxylic groups, carboxylate groups, anhydride groups, ester groups, epoxy groups.

51. Method according to any one of claims 47 to 50, wherein said silica reinforcing filler (b) is defined according to any one of claims 11 to 13.

52. Method according to any one of claims 47 to 51, wherein said copolymer of at least one ethylenically unsaturated carboxylic acid or a derivative thereof with at least one ethylenically unsaturated monomer containing at least one polyoxyalkylene side chain (c) is defined according to any one of claims 14 to 20.

53. Method according to any one of claims 47 to 52, wherein said crosslinkable elastomeric composition further comprises at least one silane coupling agent (d) which is defined according to any one of claims 21 to 23.

54. Method according to any one of claims 47 to 53, wherein said crosslinkable elastomeric composition further comprises at least one polyalkylene glycol (e) which is defined according to any one of claims 24 to 27.

55. Method according to any one of claims 47 to 54, wherein said crosslinkable elastomeric composition further comprises at least one condensation catalyst (f) which is defined according to any one of claims 28 to 30.

56. Method according to any one of claims 47 to 55, wherein said crosslinakble ealstomeric composition further comprises from 0 phr to 120 phr of at least one additional reinforcing filler.

57. Method according to claim 56, wherein said crosslinkable elastomeric composition further comprises from 20 phr to 90 phr of at least one additional reiforcing filler.

58. Method according to claim 56 or 57, wherein said additional crosslinking filler is carbon black.

## Patentansprüche

1. Reifen, der wenigstens ein Bauelement umfaßt, das seinerseits ein vernetztes Elastomermaterial umfaßt, erhalten durch Vernetzung eines vemetzbaren Elastomergemisches, das
a) wenigstens ein Dienelastomerpolymer,
b) wenigstens einen Kieselerdeverstärkungsfüller und
c) wenigstens ein Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer umfaßt.

2. Reifen nach Anspruch 1, der folgendes umfaßt:
- ein Karkassenaufbau, der im wesentlichen ringförmig ist und gegenüberliegende seitliche Kanten aufweist, die mit den rechten und linken Wulstaufbauten verbunden sind, die ihrerseits wenigstens einen Wulstkern und wenigstens einen Kemreiter aufweisen;
- einen Gürtelaufbau, der im Hinblick auf den Karkassenaufbau in radial äußerer Position aufgebracht ist;
- eine radial auf den Gürtelaufbau aufgebrachtes Laufflächenband;
- ein Paar von Seitenwänden, die lateral auf die gegenüberliegenden Seiten in Bezug auf den Karkassenaufbau aufgebracht sind;
wobei das Bauelement das Laufflächenband ist.

3. Reifen nach Anspruch 1 oder 2, bei dem das Dienelastomerpolymer a) eine Glasumwandlungstemperatur von unter 20° C aufweist.

4. Reifen nach Anspruch 3, bei dem das Dienelastomerpolymer a) ausgewählt ist unter cis-1,4-Polyisopren, 3,4-Polyisopren, Polybutadien, gegebenenfalls halogenierten Isopren-Isobuten-, 1,3-Butadien-Acrylnitril-, Styrol-, 1,3-Butadien-, Styrol-Isopren-1,3-Butadien-und Styrol-1,3-Butadien-Acrylnitril-Copolymeren oder Gemischen davon.

5. Reifen nach einem der vorhergehenden Ansprüche, bei dem das vernetzbare Elastomergemisch wenigstens 10 Gew.-%, bezogen auf das Gesamtgewicht des wenigstens einen Dienelastomerpolymers a), wenigstens eines Copolymers, ausgewählt unter Styrol-1,3-Butadien-, Styrol-Isopren-1,3-Butadien- und Styrol-1,3-Butadien-Acrylnitril-Copolymeren oder Gemischen davon, umfaßt.

6. Reifen nach einem der vorhergehenden Ansprüche, bei dem das vernetzbare Elastomergemisch 20 Gew.-% bis 100 Gew.-%, bezogen auf das Gesamtgewicht des wenigstens einen Dienelastomerpolymers a), wenigstens eines Copolymers, ausgewählt unter Styrol-1,3-Butadien-, Styrol-Isopren-1,3-Butadien- und Styrol-1,3-Butadien-Acrylnitril-Copolymeren oder Gemischen davon, umfaßt.

7. Reifen nach einem der vorhergehenden Ansprüche, bei dem das vernetzbare Elastomergemisch
50 Gew.-% bis 90 Gew.-%, bezogen auf das Gesamtgewicht des wenigstens einen Dienelastomerpolymers a), wenigstens eines Styrol-1,3-Butadien-Copolymers und
10 Gew.-% bis 50 Gew.%, bezogen auf das Gesamtgewicht des wenigstens einen Dienelastomerpolymers a), wenigstens eines Polybutadiens mit hohem 1,4 cis-Gehalt und niedrigen Vinylgehalt umfaßt.

8. Reifen nach einem der vorhergehenden Ansprüche, bei dem das vernetzbare Elastomergemisch außerdem noch wenigstens ein Elastomerpolymer a') aus einem oder mehreren Monoolefinen mit einem olefinischen Comonomer oder Derivaten davon umfaßt.

9. Reifen nach Anspruch 8, bei dem das Elastomerpolymer a') ausgewählt ist unter Ethylen-Propylen-Copolymeren (EPR) oder Ethylen-Propylen-Dien-Copolymeren (EPDM), Polyisubuten, Butylkautschuken, Halobutylkautschuken oder Gemischen davon.

10. Reifen nach einem der Ansprüche 3 bis 9, bei dem die Elastomerpolymere wenigstens eine funktionelle Gruppe, ausgewählt unter Carboxyl-, Carboxylat-, Anhydrid-, Ester- und Epoxygruppen, umfassen.

11. Reifen nach einem der vorhergehenden Ansprüche, bei dem der Kieselerdeverstärkungsfüller b) ausgewählt ist unter amorphem Kieselhydrogel, feuchter Kieselerde (hydratisierte Kieselsäure), trockener Kieselerde (wasserfreie Kieselsäure), Quarzstaub, Calcium-, Aluminium- und Magnesiumsilicat oder Gemischen davon.

12. Reifen nach einem der vorhergehenden Ansprüche, bei dem der Kieselerdeverstärkungsfüller b) im vemetzbaren Elastomergemisch in einer Menge von 10 phr bis 120 phr vorliegt.

13. Reifen nach Anspruch 12, bei dem der Kieselerdeverstärkungsfüller b) im vemetzbaren Elastomergemisch in einer Menge von 20 phr bis 90 phr vorliegt.

14. Reifen nach einem der vorhergehenden Ansprüche, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) ausgewählt ist unter Verbindungen der folgenden allgemeinen 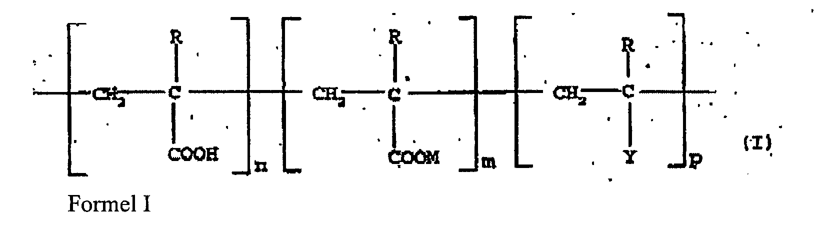 worin
R ein Wasserstoffatom oder eine unverzweigte oder verzweigte C₁₋₄-Alkylgruppe,
M ein ein- oder zweiwertiges Kation,
n eine ganze Zahl beginnend mit 0 bis einschließlich 20,
m und p, die gleich sein können oder sich voneinander untersclieiden können, eine ganze Zahl beginnend mit 1 bis einschließlich 20 und
Y eine der Gruppen der folgenden allgemeinen Formeln II, III oder IV 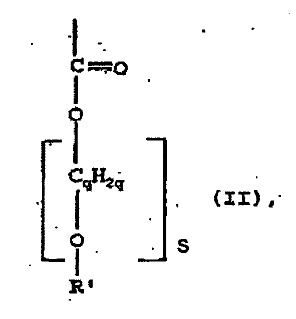 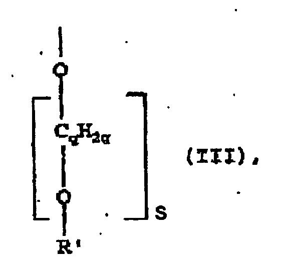 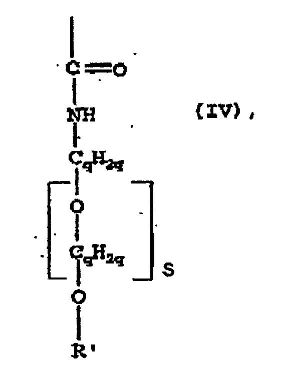 bedeuten, worin
R dieselben Bedeutungen wie oben angegeben hat,
R' ein Wasserstoffatom, eine unverzweigte oder verzweigte C₁₋₁₀-Alkylgruppe oder eine R"-SO₃M-Gruppe bedeuten, worin R" für eine unverzweigte oder verzweigte C₂₋₁₀-Alkylengruppe steht und M dieselben Bedeutungen wie oben angegeben hat,
q eine ganze Zahl beginnend mit 1 bis einschließlich 10 und
s eine ganze Zahl beginnend mit 1 bis einschließlich 100 bedeuten.

15. Reifen nach Anspruch 14, bei dem in den Verbindungen der allgemeinen Formel I M
ein Alkalimetallkation,
ein Erdalkalimetlallkation oder
ein Ammoniumkation der Formel N(R¹)₄ bedeutet, worin die Gruppen R¹, die gleich sein können oder sich voneinander unterscheiden können, ausgewählt sind unter Wasserstoffatomen, unverzweigten oder verzweigten C₁₋₁₈-Alkylgruppen, C₆₋₁₈-Arylgruppen, C₇₋₂₁-Arylalkyl- oder Alkylarylgruppen, oder
ein Zinkkation bedeutet.

16. Reifen nach einem der vorhergehenden Ansprüche, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) eine massegemittelte Molekülmasse (Mw) von 500 bis 100.000 aufweist.

17. Reifen nach Anspruch 16, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) eine massegemittelte Molekülmasse (Mw) von 1.000 bis 50.000 aufweist.

18. Reifen nach Anspruch 17, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) eine massegemittelte Molekülmasse (Mw) von 2.000 bis 30.000 aufweist.

19. Reifen nach einem der vorhergehenden Ansprüche, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) im vemetzbaren Elastomergemisch in einer Menge von 0,2 phr bis 10 phr vorliegt.

20. Reifen nach Anspruch 19, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) im vemetzbaren Elastomergemisch in einer Menge von 1 phr bis 5 phr vorliegt.

21. Reifen nach einem der vorhergehenden Ansprüche, bei dem das vernetzbare Elastomergemisch außerdem noch wenigstens ein Silankupplungsmittel d) auf Silanbasis umfaßt, das z.B. durch die allgemeine Formel VI
(R²)₃Si-CₜH₂ₜ-X (VI)
**gekennzeichnet** werden kann, worin die Gruppen R², die gleich sein können oder sich voneinander unterscheiden können, ausgewählt sind unter Alkyl-, Alkoxy- oder Aryloxygruppen oder unter Halogenatomen, mit der Maßgabe, daß wenigstens eine der Gruppen R² eine Alkoxy- oder Aryloxygruppe ist, t eine ganze Zahl beginnend mit 1 bis einschließlich 6 bedeutet, X eine Gruppe ist, ausgewählt unter Nitroso, Mercapto, Amino, Epoxid, Vinyl, Imid, Chlor, -(S)ᵤCₜH₂ₜSi-(R²)₃ oder -S-COR², worin u und t eine ganze Zahl beginnend mit 1 bis einschließlich 6 bedeuten und die Gruppen R² wie oben definiert sind.

22. Reifen nach Anspruch 21, bei dem das Silankupplungsmittel im vemetzbaren Elastomergemisch in einer Menge von 0 phr bis 10 phr vorliegt.

23. Reifen nach Anspruch 22, bei dem das Silankupplungsmittel im vernetzbaren Elastomergemisch in einer Menge von 0,5 phr bis 5 phr vorliegt.

24. Reifen nach einem der vorhergehenden Ansprüche, bei dem das vernetzbare Elastomergemisch außerdem noch wenigstens ein Polyoxyalkylenglycol e) umfaßt.

25. Reifen nach Anspruch 24, bei dem der Polyoxyalkylenglycol ausgewählt ist unter Polyoxyethylenglycol, Polyoxypropylenglycol oder Gemischen davon.

26. Reifen nach Anspruch 24 oder 25, bei dem der Polyoxyalkylenglycol im vernetzbaren Elastomergemisch in einer Menge von 0 phr bis 10 phr vorliegt.

27. Reifen nach Anspruch 26, bei dem der Polyoxyalkylenglycol im vemetzbaren Elastomergemisch in einer Menge von 0,5 phr bis 5 phr vorliegt.

28. Reifen nach einem der vorhergehenden Ansprüche, bei dem das vernetzbare Elastomergemisch außerdem noch wenigstens ein Kondensationsmittel f), ausgewählt unter Metallcarboxylaten, Arylsulfonsäuren oder Derivaten davon, Aminen und Alkanolaminen, starken anorganischen Säuren oder Basen, organischen Säuren, blockierten Säuren, durch Umsetzung mit wenigstens einer Carbonsäure und/oder einer Sulfonsäure modifizierten Zeolithen oder Gemischen davon, umfaßt.

29. Reifen nach Anspruch 28, bei dem das Kondensationsmittel im vernetzbaren Elastomergemisch in einer Menge von 0 phr bis 5 phr vorliegt.

30. Reifen nach Anspruch 29, bei dem das Kondensationsmittel im vernetzbaren Elastomergemisch in einer Menge von 0,05 phr bis 3 phr vorliegt.

31. Reifen nach einem der vorhergehenden Ansprüche, bei dem das vernetzbare Elastomergemisch 0 phr bis 120 phr wenigstens eines zusätzlichen Verstärkungsfüllers umfaßt.

32. Reifen nach Anspruch 31, bei dem das vernetzbare Elastomergemisch 20 phr bis 90 phr wenigstens eines zusätzlichen Verstärkungsfüllers umfaßt.

33. Reifen nach Anspruch 31 oder 32, bei dem der zusätzliche Verstärkungsfüller Ruß ist.

34. Vernetzbares Elastomergemisch, umfassend
d) wenigstens ein Dienelastomerpolymer,
e) wenigstens einen Kieselerdeverstärkungsfüller und
f) wenigstens ein Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) umfaßt.

35. Vernetzbares Elastomergemisch nach Anspruch 34, bei dem das Dienelastomerpolymer a) wie in einem der Ansprüche 3 bis 7 definiert ist.

36. Vernetzbares Elastomergemisch nach Anspruch 34 oder 35, das außerdem noch wenigstens ein Elastomerpolymer a') nach Anspruch 9 umfaßt.

37. Vemetzbares Elastomergemisch nach einem der Ansprüche 34 bis 36, bei dem die Elastomerpolymere wenigstens eine funktionelle Gruppe, ausgewählt unter Carboxyl-, Carboxylat-, Anhydrid-, Ester- und Epoxygruppen, umfassen.

38. Vemetzbares Elastomergemisch nach einem der Ansprüche 34 bis 37, worin der Kieselerdeverstärkungsfüller b) wie in einem der Ansprüche 11 bis 13 definiert ist.

39. Vemetzbares Elastomergemisch nach einem der Ansprüche 34 bis 38, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) wie in einem der Ansprüche 14 bis 20 definiert ist.

40. Vemetzbares Elastomergemisch nach einem der Ansprüche 34 bis 39, das außerdem noch wenigstens ein Silankupplungsmittel d), definiert wie in einem der Ansprüche 21 bis 23, umfaßt.

41. Vemetzbares Elastomergemisch nach einem der Ansprüche 34 bis 40, das außerdem noch wenigstens ein Polyoxyalkylenglycol e), definiert wie in einem der Ansprüche 24 bis 27, umfaßt.

42. Vemetzbares Elastomergemisch nach einem der Ansprüche 34 bis 41, das außerdem noch wenigstens ein Kondensationsmittel f), definiert wie in einem der Ansprüche 28 bis 30, umfaßt.

43. Vemetzbares Elastomergemisch nach einem der Ansprüche 34 bis 42, das außerdem noch 0 phr bis 120 phr wenigstens eines zusätzlichen Verstärkungsfüllers umfaßt.

44. Vemetzbares Elastomergemisch nach Anspruch 43, das außerdem noch 20 phr bis 90 phr wenigstens eines zusätzlichen Verstärkungsfüllers umfaßt.

45. Vemetzbares Elastomergemisch nach Anspruch 43 oder 44, worin der zusätzliche Vernetzungsfüller Ruß ist.

46. Vemetzes Erzeugnis, erhalten durch Vernetzung des vemetzbaren Elastomergemisches nach einem der Ansprüche 34 bis 45.

47. Verfahren zur Verbesserung der Verarbeitbarkeit und Lagerbeständigkeit eines mit Kieselerde gefüllten vemetzbaren Elastomergemisches, wobei das Verfahren das Mischen wenigstens eines Dieneleastomerpolymers a) mit wenigstens einem Kieselerdeverstärkungsfüller b) umfaßt, **dadurch gekennzeichnet, daß** das Verfahren außerdem noch die Zugabe wenigstens eines Copolymers aus wenigstens einer ethylenisch ungesättigten Carbonsäure oder eines Derivats davon mit wenigstens einem ethylenisch ungesättigten, wenigstens eine Polyoxyalkylenseitenkette enthaltenden Monomer c) zum Elastomergemisch umfaßt.

48. Verfahren nach Anspruch 47, bei dem das Dienelastomerpolymer a) wie in einem der Ansprüche 3 bis 7 definiert ist.

49. Verfahren nach Anspruch 47 oder 48, bei dem das vernetzbare Elastomergemisch außerdem noch wenigstens ein Elastomerpolymer a'), wie in Anspruch 9 definiert, umfaßt.

50. Verfahren nach einem der Ansprüche 47 bis 49, bei dem die Elastomerpolymere wenigstens eine funktionelle Gruppe, ausgewählt unter Carboxyl-, Carboxylat-, Anhydrid-, Ester- oder Epoxygruppen, umfassen.

51. Verfahren nach einem der Ansprüche 47 bis 50, bei dem der Kieselerdeverstärkungsfüller b) wie in einem der Ansprüche 11 bis 13 definiert ist.

52. Verfahren nach einem der Ansprüche 47 bis 51, bei dem das Copolymer aus wenigstens einer ethylenisch ungesättigten Carbonsäure oder einem Derivat davon mit wenigstens einem ethylenisch ungesättigten, wenigstens eine Polyoxyalkylenseitenkette enthaltenden Monomer c) wie in einem der Ansprüche 14 bis 20 definiert ist.

53. Verfahren nach einem der Ansprüche 47 bis 52, bei dem das vernetzbare Elastomergemisch außerdem noch wenigstens ein Silankupplungsmittel d) umfaßt, das gemäß einem der Ansprüche 21 bis 23 definiert ist.

54. Verfahren nach einem der Ansprüche 47 bis 53, bei dem das vernetzbare Elastomergemisch außerdem noch wenigstens ein Polyalkylenglycol e) umfaßt, das gemäß einem der Ansprüche 24 bis 27 definiert ist.

55. Verfahren nach einem der Ansprüche 47 bis 54, bei dem das vernetzbare Elastomergemisch außerdem noch wenigstens ein Kondensationsmittel f) umfaßt, das gemäß einem der Ansprüche 28 bis 30 definiert ist.

56. Verfahren nach einem der Ansprüche 47 bis 55, bei dem das vernetzbare Elastomergemisch außerdem noch 0 phr bis 120 phr wenigstens eines zusätzlichen Verstärkungsfüllers umfaßt.

57. Verfahren nach einem der Ansprüche 47 bis 56, bei dem das vernetzbare Elastomergemisch außerdem noch 20 phr bis 90 phr wenigstens eines zusätzlichen Verstärkungsfüllers umfaßt.

58. Verfahren nach Anspruch 56 oder 57, bei dem der zusätzliche Vernetzungsfüller Ruß ist.

## Revendications

1. Pneumatique comportant au moins un élément de structure comprenant un matériau élastomère réticulé, obtenu par réticulation d'une composition élastomère réticulable qui comprend :
a) au moins un élastomère de type polymère de diène ;
b) au moins une charge renforçante de type silice ;
c) et au moins un copolymère d'au moins un acide carboxylique à insaturation éthylénique ou dérivé d'un tel acide et d'au moins un monomère à insaturation éthylénique comportant au moins une chaîne latérale de type polyoxyalkylène.

2. Pneumatique conforme à la revendication 1, qui comprend :
- une structure de carcasse de forme sensiblement toroïdale, dont les bords opposés sont respectivement associés à des structures de talon droit et de talon gauche, lesquelles structures de talon comprennent chacune au moins une tringle et au moins un bourrage ;
- une structure de ceinture, placée en situation radialement externe par rapport à ladite structure de carcasse ;
- une bande de roulement, placée radialement par-dessus ladite structure de ceinture ;
- et une paire de flancs, placés latéralement sur les bords opposés de ladite structure de carcasse ;
et dans lequel ledit élément de structure est la bande de roulement.

3. Pneumatique conforme à la revendication 1 ou 2, dans lequel ledit élastomère (a) de type polymère de diène présente une température de transition vitreuse inférieure à 20 °C.

4. Pneumatique conforme à la revendication 3, pour lequel ledit élastomère (a) de type polymère de diène a été choisi parmi les suivants : cis-1,4-polyisoprène, 3,4-polyisoprène, polybutadiène, copolymères d'isoprène et d'isobutène, éventuellement halogénés, copolymères de buta-1,3-diène et d'acrylonitrile, copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères.

5. Pneumatique conforme à l'une des revendications précédentes, dans lequel ladite composition élastomère réticulable comprend, en une quantité représentant au moins 10 % du poids total dudit élastomère (a) de type polymère de diène au nombre d'au moins un, au moins un copolymère choisi parmi les suivants : copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères.

6. Pneumatique conforme à la revendication 5, dans lequel ladite composition élastomère réticulable comprend, en une quantité représentant de 20 à 100 % du poids total dudit élastomère (a) de type polymère de diène au nombre d'au moins un, au moins un copolymère choisi parmi les suivants : copolymères de buta-1,3-diène et de styrène, copolymères de buta-1,3-diène, d'isoprène et de styrène, et copolymères de buta-1,3-diène, d'acrylonitrile et de styrène, ainsi que les mélanges de tels polymères.

7. Pneumatique conforme à l'une des revendications précédentes, dans lequel ladite composition élastomère réticulable comprend :
- au moins un copolymère de buta-1,3-diène et de styrène, en une quantité représentant de 50 à 90 % du poids total dudit élastomère (a) de type polymère de diène au nombre d'au moins un,
- et au moins un polybutadiène présentant une proportion élevée d'enchaînements de type 1,4-cis et une basse teneur en groupes vinyle, en une quantité représentant de 10 à 50 % du poids total dudit élastomère (a) de type polymère de diène au nombre d'au moins un.

8. Pneumatique conforme à l'une des revendications précédentes, dans lequel ladite composition élastomère réticulable contient en outre au moins un polymère élastomère (a') formé à partir d'une ou plusieurs monooléfine(s) et d'un comonomère oléfinique ou de dérivés d'un tel comonomère.

9. Pneumatique conforme à la revendication 8, pour lequel ledit polymère élastomère (a') a été choisi parmi les suivants : copolymères d'éthylène et de propylène (EPR), copolymères d'éthylène, de propylène et de diène (EPDM), polyisobutène, caoutchoucs butyl et caoutchoucs butyl halogénés, ainsi que les mélanges de tels polymères.

10. Pneumatique conforme à l'une des revendications 3 à 9, dans lequel lesdits polymères élastomères contiennent des groupes fonctionnels d'au moins un type, choisis parmi les groupes de types acide carboxylique, carboxylate, anhydride, ester et époxyde.

11. Pneumatique conforme à l'une des revendications précédentes, pour lequel ladite charge renforçante (b) de type silice a été choisie parmi les suivantes : silice amorphe précipitée, silice humectée (acide silicique hydraté), silice sèche (acide silicique anhydre), silice de pyrohydrolyse, silicate de calcium, silicate d'aluminium, et silicate de magnésium, ainsi que leurs mélanges.

12. Pneumatique conforme à l'une des revendications précédentes, dans lequel ladite charge renforçante (b) de type silice se trouve, dans ladite composition élastomère réticulable, en une proportion de 10 à 120 ppcc (parties en poids pour cent parties de caoutchouc).

13. Pneumatique conforme à la revendication 12, dans lequel ladite charge renforçante (b) de type silice se trouve, dans ladite composition élastomère réticulable, en une proportion de 20 à 90 ppcc.

14. Pneumatique conforme à l'une des revendications précédentes, pour lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène a été choisi parmi les composés de formule générale (I) suivante : 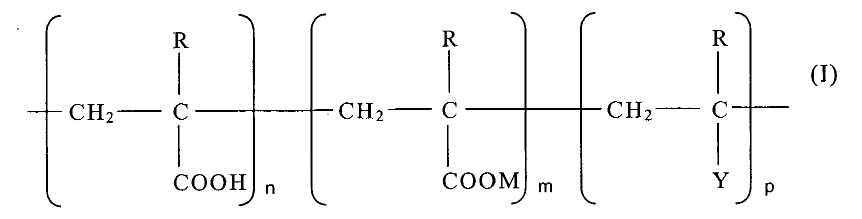 dans laquelle :
- R représente un atome d'hydrogène ou un groupe alkyle en C₁₋₄, linéaire ou ramifié ;
- M représente un cation monovalent ou divalent ;
- l'indice n est un nombre entier qui vaut de 0 à 20, bornes incluses ;
- les indices m et p représentent des nombres entiers qui peuvent être égaux ou différents l'un de l'autre et qui valent de 1 à 20, bornes incluses ;
- et Y représente un groupe correspondant à l'une des formules générales (II), (III) et (IV) suivantes : 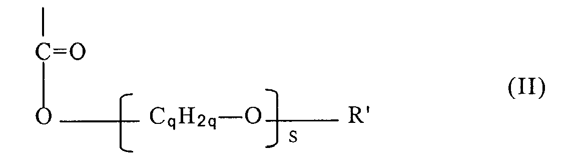 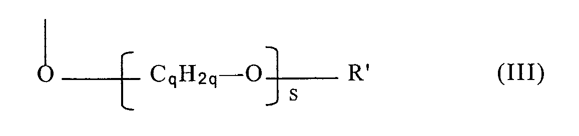 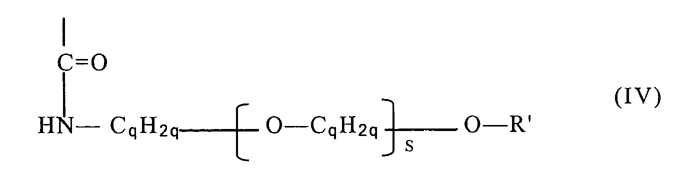
dans lesquelles
- R a la même signification que celle indiquée ci-dessus ;
- R' représente un atome d'hydrogène, un groupe alkyle en C₁₋₁₀, linéaire
ou ramifié, ou un groupe de formule R"-SO₃M où R" représente un groupe alcanediyle en C₂₋₁₀, linéaire ou ramifié, et M a la même signification que celle indiquée ci-dessus ;
- l'indice q est un nombre entier qui vaut de 1 à 10, bornes incluses ;
- et l'indice s est un nombre entier qui vaut de 1 à 100, bornes incluses.

15. Pneumatique conforme à la revendication 14, dans lequel, dans lesdits composés de formule générale (I), M représente :
- un cation de métal alcalin,
- un cation de métal alcalino-terreux,
- un cation de type ammonium, de formule N(R₁)₄ où les symboles R₁ représentent des entités qui peuvent être identiques ou différentes les unes des autres et qui sont choisies parmi des atomes d'hydrogène, les groupes alkyle en C₁₋₁₈, linéaires ou ramifiés, les groupes aryle en C₆₋₁₈, et les groupes aryl-alkyle ou alkyl-aryle en C₇₋₂₁,
- ou un cation de zinc.

16. Pneumatique conforme à l'une des revendications précédentes, dans lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 500 à 100 000.

17. Pneumatique conforme à la revendication 16, dans lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 1000 à 50 000.

18. Pneumatique conforme à la revendication 17, dans lequel ledit copolymère (d) d'au moins un acide carboxylique à insaturation éthylénique ou dérivé d'un tel acide et d'au moins un monomère à insaturation éthylénique comportant au moins une chaîne latérale de type polyoxyalkylène présente une masse molaire moyenne en poids Mw valant de 2000 à 30 000.

19. Pneumatique conforme à l'une des revendications précédentes, dans lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène se trouve, dans ladite composition élastomère réticulable, en une proportion de 0,2 à 10 ppcc.

20. Pneumatique conforme à la revendication 19, dans lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène se trouve, dans ladite composition élastomère réticulable, en une proportion de 1 à 5 ppcc.

21. Pneumatique conforme à l'une des revendications précédentes, dans lequel ladite composition élastomère réticulable comprend en outre au moins un agent de couplage (d) de type silane, à base d'un silane qui peut, par exemple, être représenté par la formule générale (VI) suivante :
(R₂)₃Si-CₜH₂ₜ-X (VI)
dans laquelle
- les symboles R₂ représentent des entités qui peuvent être identiques
ou différentes les unes des autres et qui sont choisies parmi les groupes alkyle, alcoxy et aryloxy et les atomes d'halogène, sous réserve qu'au moins l'une des entités représentées par R₂ soit un groupe alcoxy ou aryloxy ;
- l'indice t est un nombre entier qui vaut de 1 à 6, bornes incluses ;
- X représente une entité choisie parmi les groupes nitroso, sulfanyle, amino et vinyle, les groupes de type époxyde ou imide, un atome de chlore, et les groupes de formule —(S)ᵤ—CₜH₂ₜ—Si(R₂)₃ ou -S-CO-R₂ où les indices t et u sont des nombres entiers qui valent de 1 à 6, bornes incluses, et R₂ a la signification indiquée ci-dessus.

22. Pneumatique conforme à la revendication 21, dans lequel ledit agent de couplage de type silane se trouve, dans ladite composition élastomère réticulable, en une proportion de 0 à 10 ppcc.

23. Pneumatique conforme à la revendication 22, dans lequel ledit agent de couplage de type silane se trouve, dans ladite composition élastomère réticulable, en une proportion de 0,5 à 5 ppcc.

24. Pneumatique conforme à l'une des revendications précédentes, dans lequel ladite composition élastomère réticulable comprend en outre au moins un polyoxyalkylène-glycol (e).

25. Pneumatique conforme à la revendication 24, dans lequel ledit polyoxyalkylène-glycol est choisi parmi un polyoxyéthylène-glycol, un polyoxypropylène-glycol et un mélange de tels composés.

26. Pneumatique conforme à la revendication 24 ou 25, dans lequel ledit polyoxyalkylène-glycol se trouve, dans ladite composition élastomère réticulable, en une proportion de 0 à 10 ppcc.

27. Pneumatique conforme à la revendication 26, dans lequel ledit polyoxyalkylène-glycol se trouve, dans ladite composition élastomère réticulable, en une proportion de 0,5 à 5 ppcc.

28. Pneumatique conforme à l'une des revendications précédentes, dans lequel ladite composition élastomère réticulable comprend en outre au moins un catalyseur de condensation (f) choisi parmi les carboxylates de métal, les acides arène-sulfoniques et leurs dérivés, les amines et alcanolamines, les acides et bases inorganiques forts, les acides organiques, les acides bloqués, et les zéolithes modifiées par réaction avec au moins un acide carboxylique et/ou un acide sulfonique, ainsi que les mélanges de tels composés.

29. Pneumatique conforme à la revendication 28, dans lequel ledit catalyseur de condensation se trouve, dans ladite composition élastomère réticulable, en une proportion de 0 à 5 ppcc.

30. Pneumatique conforme à la revendication 29, dans lequel ledit catalyseur de condensation se trouve, dans ladite composition élastomère réticulable, en une proportion de 0,05 à 3 ppcc.

31. Pneumatique conforme à l'une des revendications précédentes, dans lequel ladite composition élastomère réticulable comprend de 0 à 120 ppcc d'au moins une charge renforçante supplémentaire.

32. Pneumatique conforme à la revendication 31, dans lequel ladite composition élastomère réticulable comprend de 20 à 90 ppcc d'au moins une charge renforçante supplémentaire.

33. Pneumatique conforme à la revendication 31 ou 32, dans lequel ladite charge renforçante supplémentaire est un noir de carbone.

34. Composition élastomère réticulable, qui comprend :
a) au moins un élastomère de type polymère de diène ;
b) au moins une charge renforçante de type silice ;
c) et au moins un copolymère d'au moins un acide carboxylique à insaturation éthylénique ou dérivé d'un tel acide et d'au moins un monomère à insaturation éthylénique comportant au moins une chaîne latérale de type polyoxyalkylène.

35. Composition élastomère réticulable, conforme à la revendication 34, dans laquelle ledit élastomère (a) de type polymère de diène est tel que défini dans l'une des revendications 3 à 7.

36. Composition élastomère réticulable, conforme à la revendication 34 ou 35, qui comprend en outre un polymère élastomère (a'), qui est tel que défini dans la revendication 9.

37. Composition élastomère réticulable, conforme à l'une des revendications 34 à 36, dans laquelle lesdits polymères élastomères contiennent des groupes fonctionnels d'au moins un type, choisis parmi les groupes de types acide carboxylique, carboxylate, anhydride, ester et époxyde.

38. Composition élastomère réticulable, conforme à l'une des revendications 34 à 37, dans laquelle ladite charge renforçante (b) de type silice est telle que définie dans l'une des revendications 11 à 13.

39. Composition élastomère réticulable, conforme à l'une des revendications 34 à 38, dans laquelle ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène est tel que défini dans l'une des revendications 14 à 20.

40. Composition élastomère réticulable, conforme à l'une des revendications 34 à 39, qui comprend en outre au moins un agent de couplage (d) de type silane, tel que défini dans l'une des revendications 21 à 23.

41. Composition élastomère réticulable, conforme à l'une des revendications 34 à 40, qui comprend en outre au moins un polyoxyalkylène-glycol (e), tel que défini dans l'une des revendications 24 à 27.

42. Composition élastomère réticulable, conforme à l'une des revendications 34 à 41, qui comprend en outre au moins un catalyseur de condensation (f), tel que défini dans l'une des revendications 28 à 30.

43. Composition élastomère réticulable, conforme à l'une des revendications 34 à 42, qui comprend en outre de 0 à 120 ppcc d'au moins une charge renforçante supplémentaire.

44. Composition élastomère réticulable, conforme à la revendication 43, qui comprend en outre de 20 à 90 ppcc d'au moins une charge renforçante supplémentaire.

45. Composition élastomère réticulable, conforme à la revendication 43 ou 44, dans laquelle ladite charge renforçante supplémentaire est un noir de carbone.

46. Article de fabrication réticulé, obtenu par réticulation d'une composition élastomère réticulable conforme à l'une des revendications 34 à 45.

47. Procédé permettant d'améliorer l'aptitude à subir un traitement et la stabilité au stockage d'une composition élastomère réticulable chargée de silice, lequel procédé comporte le fait de mélanger au moins un élastomère (a) de type polymère de diène et au moins une charge renforçante (b) de type silice, et lequel procédé est **caractérisé en ce qu'**il comporte en outre le fait d'ajouter à cette composition élastomère au moins un copolymère (c) d'au moins un acide carboxylique à insaturation éthylénique ou dérivé d'un tel acide et d'au moins un monomère à insaturation éthylénique comportant au moins une chaîne latérale de type polyoxyalkylène.

48. Procédé conforme à la revendication 47, dans lequel ledit élastomère (a) de type polymère de diène est tel que défini dans l'une des revendications 3 à 7.

49. Procédé conforme à la revendication 47 ou 48, dans lequel ladite composition élastomère réticulable comprend en outre un polymère élastomère (a'), tel que défini dans la revendication 9.

50. Procédé conforme à l'une des revendications 47 à 49, dans lequel lesdits polymères élastomères contiennent des groupes fonctionnels d'au moins un type, choisis parmi les groupes de types acide carboxylique, carboxylate, anhydride, ester et époxyde.

51. Procédé conforme à l'une des revendications 47 à 50, dans lequel ladite charge renforçante (b) de type silice est telle que définie dans l'une des revendications 11 à 13.

52. Procédé conforme à l'une des revendications 47 à 51, dans lequel ledit copolymère (c) d'au moins un acide carboxylique à insaturation éthylénique ou dérivé d'un tel acide et d'au moins un monomère à insaturation éthylénique comportant au moins une chaîne latérale de type polyoxyalkylène est tel que défini dans l'une des revendications 14 à 20.

53. Procédé conforme à l'une des revendications 47 à 52, dans lequel ladite composition élastomère réticulable comprend en outre au moins un agent de couplage (d) de type silane, tel que défini dans l'une des revendications 21 à 23.

54. Procédé conforme à l'une des revendications 47 à 53, dans lequel ladite composition élastomère réticulable comprend en outre au moins un polyoxyalkylène-glycol (e), tel que défini dans l'une des revendications 24 à 27.

55. Procédé conforme à l'une des revendications 47 à 54, dans lequel ladite composition élastomère réticulable comprend en outre au moins un catalyseur de condensation (f), tel que défini dans l'une des revendications 28 à 30.

56. Procédé conforme à l'une des revendications 47 à 55, dans lequel ladite composition élastomère réticulable comprend en outre de 0 à 120 ppcc d'au moins une charge renforçante supplémentaire.

57. Procédé conforme à la revendication 56, dans lequel ladite composition élastomère réticulable comprend en outre de 20 à 90 ppcc d'au moins une charge renforçante supplémentaire.

58. Procédé conforme à la revendication 56 ou 57, dans lequel ladite charge renforçante supplémentaire est un noir de carbone.
